(19) Europäisches Patentamt
European Patent Office
Office européen des brevets

(11) **EP 3 048 846 B1**

(12) **EUROPEAN PATENT SPECIFICATION**

(45) Date of publication and mention
of the grant of the patent:
**04.07.2018 Bulletin 2018/27**

(51) Int Cl.:
***H04W 72/08*** *(2009.01)*

(21) Application number: **15305074.5**

(22) Date of filing: **23.01.2015**

(54) **Method, system and a computer program product for managing the operation of a wireless access point**

Verfahren, System und Computerprogrammprodukt zur Verwaltung des Betriebs eines drahtlosen Zugangspunktes

Procédé, système et produit de programme informatique pour gérer le fonctionnement d'un point d'accès sans fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.07.2016 Bulletin 2016/30**

(73) Proprietor: **Alcatel Lucent**
**91620 Nozay (FR)**

(72) Inventor: **Gacanin, Haris**
**2018 Antwerpen (BE)**

(74) Representative: **Nokia Bell Patent Attorneys**
**Copernicuslaan 50**
**2018 Antwerp (BE)**

(56) References cited:
**EP-A1- 1 617 600       EP-A1- 2 412 197**
**WO-A1-2013/152305       US-A1- 2004 166 852**
**US-A1- 2006 292 988       US-A1- 2008 019 324**

## Description

Field of Invention

Embodiments of the invention relate to the field of managing the operation of wireless access points in a network, and in particular to a method, a system and a computer program product for managing the operation of a wireless access point, wherein the access point is operating on at least one of a plurality of available operating channels.

Background

Wireless technologies such as WiFi access are widely used for indoor and outdoor wireless data services. Due to an already large number of devices that operate on the 2.4 GHz band the IEEE 802.11 standardization group has decided to allow dual mode operation on the 2.4 GHz and 5 GHz bands. While the number of channels in the 2.4 GHz (802.11b/g/n) band is only fourteen, the 5 GHz (802.11a/h/j/n/ac) band offers a much larger amount of bands, while the exact allowed amount of bands does depend on country specific regulations. However, neighbouring WiFi networks that operate on the same or adjacent channel will introduce interference within the other WiFi network and cause low throughput of the WiFi network and a bad quality of service (QOS) towards end users of wireless devices connected to the network.

US 2006/292988 A1 discloses a system for access point channel selection based upon a channel quality index which is a value quantifying a transmission quality of a channel. Trnasmission quality is evaluated based on a combination of different types of measured interference such as channels congestion, adjacent channel interference and in-band interference.

EP 1 617 600 A1 discloses a channel decision system for an access point wherein a terminal has an application function of intercommunicating with each access point in a wireless LAN system to transmit an interference amount measurement request to the access points within the LAN system. The terminal then prioritizes each access point in the order in which a sum of signal strengths in the returned interference amount information is larger.

WO 2013/152305 A1 discloses a management method for Wi-Fi access points, wherein measurement data is received from a plurality of Wi-Fi access points via a control interface. Based at least in part on a set of network optimization goals and the measurement data received from the plurality of access points optimized adjustments to one or more Wi-Fi parameters associated with one or more of the plurality of access points are searched. At least some of the optimized adjustments to the one or more Wi-Fi parameters are transmitted to the one or more of the plurality of access points using the control interface.

## Summary

The object of embodiments of the invention is to provide a management method of, and a management system for operating a wireless access point, at least causing the access point to operate with a minimized amount of interference. Embodiments of the invention further aim to provide a management method for wireless access points in a network of wireless access points, at least minimizing interference encountered by the access points and increasing throughput within the network of access points.

According to a first aspect of the invention there is provided a management method according to claim 1. Embodiments of the invention are based *inter alia* on the insight that by measuring signal strengths on a variety of available operating channels, per channel the interference level can be estimated. Based on these interference levels, it can be determined which operating channel has only a small level of interference compared to other available operating channels, and which operating channel is a good candidate for the access point to operate on. The above described steps are carried out automatically, whereas in prior art access points an operating channel must be set up manually, which is an enormous task. Moreover, the steps of the above described method can be carried out at multiple occasions, for example during installation of the access point, or at predefined moments in time, etc. Therefore the access point automatically finds the best suited channel to operate on, and no manual interventions are needed during operation of the access point.

According to a preferred embodiment the method further comprises repeating or performing the steps of claim 1 for any wireless user device which is respectively connected to or attempting to connect to the access point. The above described method steps can therefore also be carried out when a mobile wireless user device attempts to access the wireless network via the access point. This approach ensures that the wireless user device joins the network at the most appropriate operating channel, and that a quality of service for each connected wireless user device is guaranteed. Performing the signal strength measurements and interference level estimations separately for each wireless user device ensures that at any moment in time, user devices are connected to the network via favorable operating channels, and that network conditions are constantly updated.

According to a further embodiment the step of obtaining signal strengths comprises detecting the signal strengths from at least one source from a group comprising at least one neighboring access point and at least one wireless user device. Neighboring access points can cause severe interference on the available operating channels of the access point when the neighboring access points are operating on the same operating channel or on nearby operating channels, which overlap with the operating channels of the access point. By taking into account the signal strength of these neighboring access points and the interference they cause on the respective operating channels, a suitable operating channel can be selected for the access point. Except for neighboring access points, nearby wireless user devices can also cause interference on available operating channels of the access points. Therefore taking into account the signal strengths of nearby user devices on any one of the available operating channels allows for an improved estimation of interference levels on the available operating channels and therefore improves the operating channel selection process.

According to an embodiment of the invention, when said access point is part of a network of wireless access points which comprises at least one neighboring access point, the method comprises a step of lowering interference levels for the access point by lowering a transmit power of the at least one neighboring access point. In a network of access points, in addition to selecting a favorable operating channel for an access point, interference on particular operating channels or overall interference can be reduced by lowering the influence of neighboring access points. These neighboring access points operate with a transmit power, which may cause the signals of the neighboring access points to interfere with the operation of the access point. By providing a connection between the access point and the neighboring access point(s), the access point, which encounters a lot of interference of a particular neighboring access point can request or cause the neighboring access point to lower its transmit power, resulting in at least a smaller amount of interference within the area of the access point. In view of the network of access points, this method step of adapting transmit power will provide in at least an improved coverage within the network of access points. In addition all steps of the above described method can be executed for every (neighboring) access point within the network of access points, thereby resulting in a self-configuring or self-healing network of access points, with optimized service levels at all times.

According to a preferred embodiment lowering a transmit power of at least one neighboring access point comprises lowering the transmit power of the at least one neighboring access point essentially without compromising a required quality of service of the at least one neighboring access point. To keep from lowering the transmit power of the neighboring access point too much, the method takes into account quality of service (QOS) requirements of that specific neighboring access point. Therefore transmit power is lowered, resulting in less interference at the access point and in the neighboring access point being able to provide its services in a good manner, albeit with a lower transmit power. The QOS requirements for a neighboring access point can include a minimum required bandwidth or transmit power for providing specific services such as TV over internet, email, video services, etc.

According to a preferred embodiment the plurality of available operating channels are divided over at least a first band and a second band, and selecting from the more than one of said plurality of available operating channels, based on the interference levels, an operating channel exhibiting a lowest interference level comprises switching from an available operating channel within the first band to an available operating channel in the second band. When considering the WiFi networks, the first band and the second band are the 2.4 GHz band and the 5 GHz band respectively. With respect to methods which only target operating channels within the 2.4 GHz band, the method described above takes into account the 5 GHz band as well. This results in more available operating channels for the access point, and more possibilities to provide a good QOS for any wireless user device connected to the access point. The possibility to switch from a channel in one band to another channel in the other band, for example from 2.4 GHz band to 5 GHz band, allows for an operating channel to be selected based on particular characteristics of the respective band.

For example a wireless user device which is located relatively far from the access point is switched to a channel in the 2.4 GHz band, because this band offers a wider range compared to the 5 GHz band, while a wireless user device which is located relatively close to the access point is switched to a channel in the 5 GHz band, because this band offer an overall smaller amount of interference compared to the 2.4 GHz band.

According to an embodiment estimating, based on the signal strength parameters, interference levels at the more than one of the plurality of available operating channels of the access point comprises accumulating the signal strength parameters per available operating channel. This allows for a clear overall view on estimated interference levels per operating channel, regardless of the source of the measured signal strengths and the locations from where they originate.

The skilled person will understand that the hereinabove described technical considerations and advantages for method embodiments also apply to the below described system embodiments, *mutatis mutandis.*

According to a second aspect of the invention there is provided a management system according to claim 7. According to an embodiment the obtaining unit is further configured for detecting the signal strengths from at least one source from a group comprising at least one neighboring access point and at least one wireless user device.

According to an embodiment the management system further comprises a network of wireless access points which comprises at least one neighboring access point and a transmit power controlling unit configured for lowering interference levels for the access point by lowering a transmit power of the at least one neighboring access point. In a network of access points, in addition to selecting a favorable operating channel for an access point, interference on particular operating channels or overall interference can be reduced by lowering the influence of neighboring access points. These neighboring access points operate with a transmit power, which may cause the signals of the neighboring access points to interfere with the operation of the access point. By providing a transmit power controlling unit in connection with the access point and the neighboring access point(s), the access point, which encounters a lot of interference of a particular neighboring access point can request or cause the neighboring access point to lower its transmit power via the transmit power controlling unit, resulting in at least a smaller amount of interference within the area of the access point. In view of the network of access points, this transmit power control unit will provide in at least an improved throughput and/or coverage within the network of access points. In addition all steps of the earlier described method can be executed for every (neighboring) access point within the network of access points, thereby resulting in a self-configuring or self-healing system for the network of access points, providing optimized service levels at all times.

According to a preferred embodiment the transmit power controlling unit is further configured for lowering the transmit power of the at least one neighboring access point essentially without compromising a required quality of service of the at least one neighboring access point.

According to a preferred embodiment of the invention the transmit power controlling unit is a remote component which is separated from the access point and the at least one neighboring access point. By providing the transmit power controlling unit as a remote component, information concerning signal strengths of various (neighboring) access points, interference levels, etc. can be organized in a centralized manner. This centralized, remote component is used as a communication means between the access point and neighboring access points in the network of access points. This alleviates the technical problem of existing systems which rely on fully cooperative, homogeneous WiFi deployments, which is not feasible in practice since the homogeneousity should be maintained throughout both user device (chipset) vendor and operator management base. In the prior art, there has not been a solution for non-homogeneous deployments due to the large number of different device vendors as well as network and service operators in dense areas. The non-homogenous deployments maybe could have led to a channel selection per access point, but cannot provide an overall coverage optimization.

According to an embodiment the plurality of available operating channels are divided over at least a first band and a second band, and the selecting unit is further configured for switching from an available operating channel within the first band to an available operating channel within the second band. Known systems can only cope with frequency channel selection in a single band, and do no deal with coverage optimization. The ability to switch channels between bands offers a lot more possibilities to the system or access point to find available low interference operating channels.

According to a preferred embodiment the estimating unit is further configured for accumulating the signal strength parameters per available operating channel.

According to a further aspect of the invention, there is provided a computer program product comprising computer-executable instructions for performing the method of any one of the claims 1 to 7, when the program is run on a computer.

According to a further aspect of the invention, there is provided a computer program comprising computer-executable instructions to perform the method of any one of the claims 1 to 7, when the program is run on a computer, according to any one of the steps of any one of the embodiments disclosed above.

According to a further aspect of the invention, there is provided a computer device or other hardware device programmed to perform one or more steps of any one of the embodiments of the method of any one of the claims 1 to 6 disclosed above. According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

> Figure 1 is a flowchart illustrating an embodiment of an exemplary management method of operating a wireless access point;
> Figure 2 is a flowchart illustrating another embodiment of an exemplary management method of operating a wireless access point;
> Figure 3 is a schematic drawing of an exemplary embodiment of a management system according to the invention; and
> Figure 4 schematically illustrates a network of (neighboring) wireless access points, and the concept of a centralized management system.

Description of embodiments

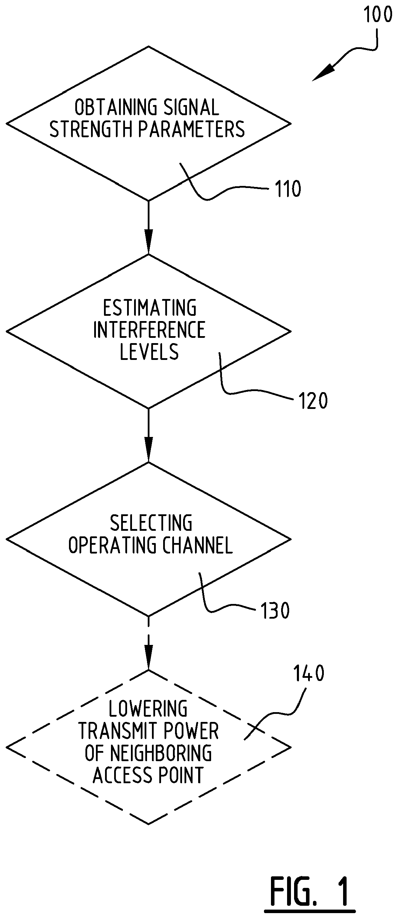

Figure 1 illustrates a management method 100 of operating a wireless access point, the access point operating on at least one of a plurality of available operating channels, the method comprising the following steps:

- step 110 of obtaining signal strength parameters, which are representative for signal strengths which are detected by the access point at more than one of the plurality of available operating channels;

- step 120 of estimating, based on the signal strength parameters, interference levels related to the more than one of the plurality of available operating channels; and

- step 130 of selecting from the more than one of said plurality of available operating channels, based on the interference levels, an operating channel exhibiting a lowest interference level.

According to a preferred embodiment the method further comprises repeating or performing the steps 110, 120 and 130 for any wireless user device which is respectively connected to or attempting to connect to the access point.

According to a further embodiment step 110 of obtaining signal strengths comprises detecting the signal strengths from at least one source from a group comprising at least one neighboring access point and at least one wireless user device.

According to an embodiment of the invention, when said access point is part of a network of wireless access points which comprises at least one neighboring access point, the method comprises a step 140 of lowering interference levels for the access point by lowering a transmit power of the at least one neighboring access point.

According to a preferred embodiment lowering a transmit power of at least one neighboring access point, step 140, comprises lowering the transmit power of the at least one neighboring access point essentially without compromising a required quality of service of the at least one neighboring access point.

According to an embodiment step 120 of estimating, based on the signal strength parameters, interference levels at the more than one of the plurality of available operating channels of the access point comprises accumulating the signal strength parameters per available operating channel.

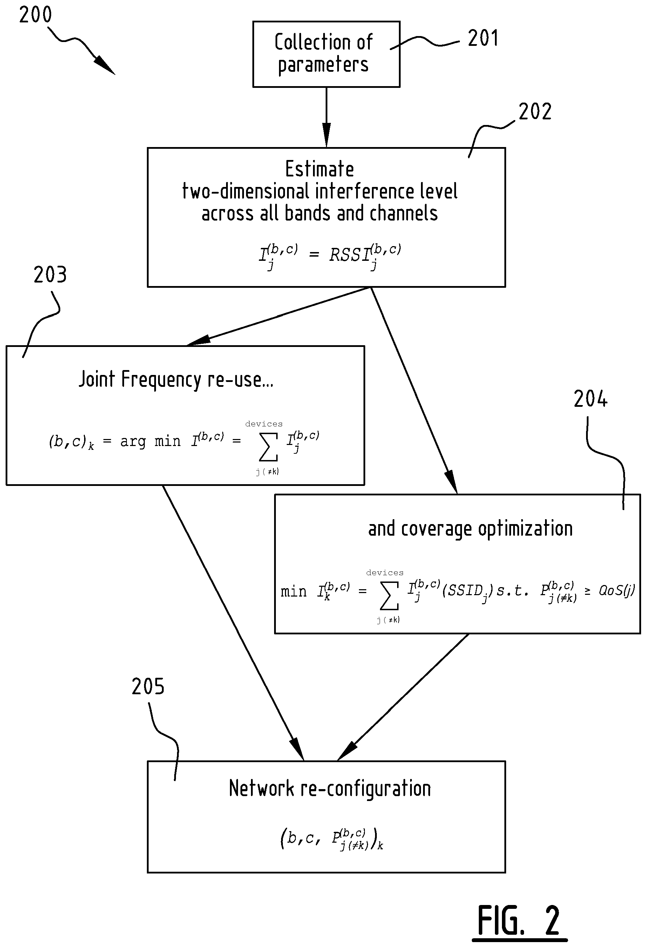

Figure 2 illustrates another embodiment of an exemplary management method of operating a wireless access point. The goal is to 'sense' and 'balance' the frequency reuse and jointly optimize the transmit power level(s) to improve coverage/capacity. This is achieved by executing following steps:

1) Step 201, collection of signal strength parameters, for example received signal strength indications (RSSI) from neighboring access points in all bands.

2) Step 202, estimating a level of interference I per band b: accumulate RSSIs per channel c per device/access point (AP). Selecting the band b and its operating channel c with lower interference.

3) Step 203, subject to the power level of the $j^{th}$ AP,

$P_j^{(b,c)}$, while keeping its operating QOS requirement, minimizing the interference I at the $k^{th}$ AP in the $b^{th}$ band and $c^{th}$ channel.

4) Re-configure the $k^{th}$ AP parameters $b$ and $c$, while managing the $j^{th}$ AP power $P_j^{(b,c)}$ (for all APs $j$).

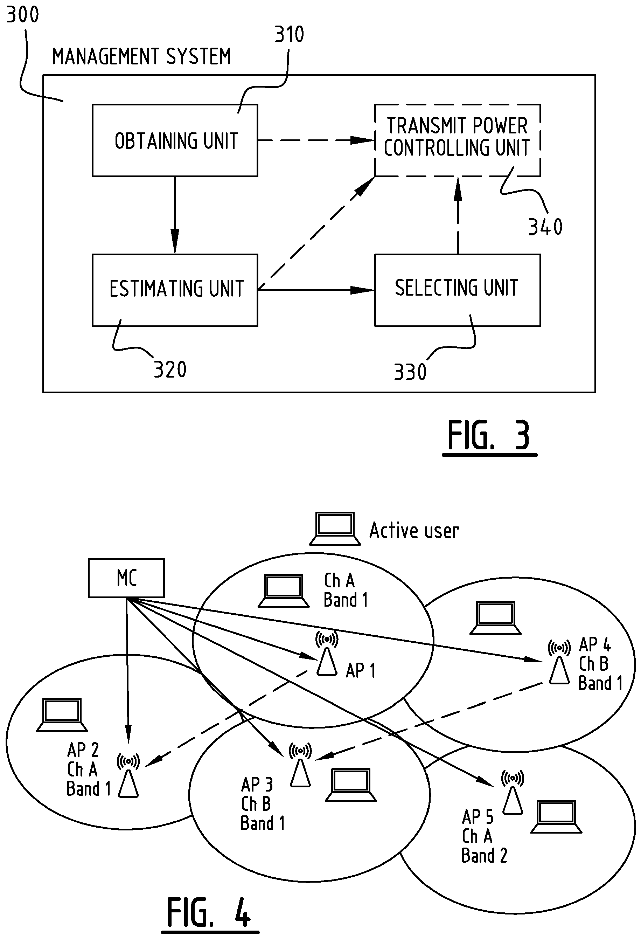

Figure 3 illustrates an embodiment of a management system 300 according to the invention. The management system comprising at least one access point, wherein the access point operates on at least one of a plurality of available operating channels. The system comprises:

- an obtaining unit 310 configured for obtaining signal strength parameters, which are representative for signal strengths which are detected by the access point at more than one of the plurality of available operating channels;

- an estimating unit 320 configured for estimating, based on the signal strength parameters, interference levels related to the more than one of the plurality of available operating channels; and

- a selecting unit 330 configured for selecting from the more than one of the plurality of available operating channels, based on the interference levels, an operating channel exhibiting a lowest interference level.

According to an embodiment the obtaining unit 310 is further configured for detecting the signal strengths from at least one source from a group comprising at least one neighboring access point and at least one wireless user device.

According to an embodiment the management system 300 further comprises a network of wireless access points which comprises at least one neighboring access point and a transmit power controlling unit 340 configured for lowering interference levels for the access point by lowering a transmit power of the at least one neighboring access point.

Figure 4 schematically illustrates such a network of wireless access points comprising a total of five wireless access points (AP1-AP5). In the shown example AP1-AP4 operate within the same band (band 1), with AP1 and AP2 operating on channel A (Ch A) and AP3 and AP4 operating on channel B (Ch B). AP 5 operates on channel A (Ch A) within a different band (band 2), which is therefore different from the channel A in band 1. The dotted arrow connecting AP1 and AP2 and the dotted arrow connecting AP3 and AP4 illustrate the influence that the access points carry out on each other. Since AP1 and AP2 operate on the same channel within the same band, they will experience interference from each other. The same applies to AP3 and AP4.

According to a preferred embodiment the transmit power controlling unit 340 is further configured for lowering the transmit power of the at least one neighboring access point essentially without compromising a required quality of service of the at least one neighboring access point.

According to a preferred embodiment of the invention the transmit power controlling unit 340 is a remote component which is separated from the access point and the at least one neighboring access point. Referring to figure 4, a possible embodiment of a remote component comprising the transmit power controlling unit 340 is illustrated as a management center (MC), which is a centralized component in connection with the access points in the network (AP1-AP5). The management center operates as a communication means between the different access points, as illustrated by the arrows. Even access points of different vendors are able to communicate with each other through the MC. This way, the MC enables a centralized manner of managing such a network of access points. The MC can gather information relating to interference levels, signal strengths, transmit powers, etc. from all access points to which it is connected. In spite of being illustrated as a remote component, the MC can also be part of an access point or be allocated at all or some access points of the network of access points.

According to an embodiment the plurality of available operating channels are divided over at least a first band and a second band, and the selecting unit is further configured for switching from an available operating channel within the first band to an available operating channel within the second band.

According to a preferred embodiment the estimating unit is further configured for accumulating the signal strength parameters per available operating channel.

According to a further aspect of the invention, there is provided a computer program product comprising computer-executable instructions for performing the method of any one of the claims 1 to 7, when the program is run on a computer.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1. A management method (100) of operating a wireless access point, the access point operating on at least one of a plurality of available operating channels, the method comprising the following steps:

   - obtaining (110) signal strength parameters, which are representative for signal strengths which are detected by said access point at more than one of said plurality of available operating channels;
   - estimating (120), based on said signal strength parameters, interference levels related to said more than one of said plurality of available operating channels; and
   - selecting (130) from said more than one of said plurality of available operating channels, based on said interference levels, an operating channel exhibiting a lowest interference level; **characterized by** repeating the described steps (110, 120, 130) separately for every wireless user device which is connected to said access point.

2. The management method according to claim 1, wherein the step of obtaining (110) signal strengths comprises detecting said signal strengths from at least one source from a group comprising at least one neighboring access point and at least one wireless user device.

3. The management method according to any one of the preceding claims, wherein said access point is part of a network of wireless access points which comprises at least one neighboring access point, the method comprising a step of lowering (140) interference levels for said access point by lowering a transmit power of said at least one neighboring access point.

4. The management method according to claim 3 wherein lowering (140) a transmit power of at least one neighboring access point comprises lowering the transmit power of said at least one neighboring access point without compromising a required quality of service of said at least one neighboring access point.

5. The management method according to any one of the preceding claims, wherein said plurality of available operating channels are divided over at least a first band and a second band, and wherein selecting from said more than one of said plurality of available operating channels, based on said interference levels, an operating channel exhibiting a lowest interference level comprises switching from an available operating channel within said first band to an available operating channel within said second band.

6. The management method according to any one of the preceding claims, wherein estimating (120), based on said signal strength parameters, interference levels at said more than one of said plurality of available operating channels of said access point comprises accumulating said signal strength parameters per available operating channel.

7. A management system (300) comprising at least one access point, wherein the access point operates on at least one of a plurality of available operating channels, the system comprising:

- an obtaining unit (310) configured for obtaining signal strength parameters, which are representative for signal strengths which are detected by said access point at more than one of said plurality of available operating channels;
- an estimating unit (320) configured for estimating, based on said signal strength parameters, interference levels related to said more than one of said plurality of available operating channels; and
- a selecting unit (330) configured for selecting from said more than one of said plurality of available operating channels, based on said interference levels, an operating channel exhibiting a lowest interference level;

**characterized in that** the obtaining unit (310), estimating unit (320) and selecting unit (330) are configured to repeat their respective tasks separately for every wireless user device which is connected to said access point.

8. The management system according to claim 7, wherein the obtaining unit (310) is further configured for detecting said signal strengths from at least one source from a group comprising at least one neighboring access point and at least one wireless user device.

9. The management system according to claim 7 or 8, further comprising a network of wireless access points which comprises at least one neighboring access point; and a transmit power controlling unit (340) configured for lowering interference levels for said access point by lowering a transmit power of said at least one neighboring access point.

10. The management system according to claim 9 wherein said transmit power controlling unit (340) is further configured for lowering the transmit power of said at least one neighboring access point without compromising a required quality of service of said at least one neighboring access point.

11. The management system according to claim 9 or 10, wherein the transmit power controlling unit (340) is a remote component which is separated from said access point and said at least one neighboring access point.

12. The management system according to any one of the claims 8 to 12, wherein said plurality of available operating channels are divided over at least a first band and a second band, and wherein the selecting unit is further configured for switching from an available operating channel within said first band to an available operating channel within said second band.

13. The management system according to any one of the claims 8 to 13, wherein the estimating unit (320) is further configured for accumulating said signal strength parameters per available operating channel.

14. A computer program product comprising computer-executable instructions for performing the method of any one of the claims 1 to 6, when the program is run on a computer.

**Patentansprüche**

1. Verwaltungsverfahren (100) für den Betrieb eines drahtlosen Zugangspunkts, wobei der Zugangspunkt auf mindestens einem aus einer Vielzahl von verfügbaren Betriebskanälen in Betrieb ist, wobei das Verfahren folgende Schritte umfasst:

- Erhalten (110) von Signalstärkeparametern, die bezeichnend sind für Signalstärken, die von dem besagten Zugangspunkt an mehr als einem aus der besagten Vielzahl von verfügbaren Betriebskanälen erkannt werden;
- Schätzen (120), basierend auf den besagten Signalstärkeparametern, von Interferenzpegeln in Zusammenhang mit den besagten mehr als einem aus der besagten Vielzahl von verfügbaren Betriebskanälen; und
- Auswählen (130) aus den besagten mehr als einem aus der besagten Vielzahl von verfügbaren Betriebskanälen, basierend auf den besagten Interferenzpegeln, eines Betriebskanals, der einen niedrigsten Interferenzpegel zeigt;

**gekennzeichnet durch** Wiederholen der beschriebenen Schritte (110, 120, 130) getrennt für jede drahtlose Benutzervorrichtung, die mit dem besagten Zugangspunkt verbunden ist.

2. Verwaltungsverfahren nach Anspruch 1, wobei der Schritt des Erhaltens (110) von Signalstärken das Erkennen der besagten Signalstärken aus mindestens einer Quelle aus einer Gruppe umfasst, die mindestens einen benachbarten Zugangspunkt und mindestens eine drahtlose Benutzervorrichtung umfasst.

3. Verwaltungsverfahren nach einem beliebigen der vorstehenden Ansprüche, wobei der besagte Zugangspunkt Teil eines Netzwerks von drahtlosen Zugangspunkten ist, das mindestens einen benachbarten Zugangspunkt umfasst, wobei das Verfahren einen Schritt des Senkens (140) von Interferenzpegeln für den besagten Zugangspunkt durch Senken einer Übertragungsleistung des besagten mindestens einen benachbarten Zugangspunkts umfasst.

4. Verwaltungsverfahren nach Anspruch 3, wobei das Senken (140) einer Übertragungsleistung von mindestens einem benachbarten Zugangspunkt das Senken der Übertragungsleitung des besagten mindestens einen benachbarten Zugangspunkts ohne Beeinträchtigung einer erforderlichen Dienstgüte des besagten mindestens einen benachbarten Zugangspunkts umfasst.

5. Verwaltungsverfahren nach einem beliebigen der vorstehenden Ansprüche, wobei die besagte Vielzahl von verfügbaren Betriebskanälen auf mindestens ein erstes Band und ein zweites Band aufgeteilt ist, und wobei das Auswählen aus den besagten mehr als einem aus der besagten Vielzahl von verfügbaren Betriebskanälen, basierend auf den besagten Interferenzpegeln, eines Betriebskanals, der einen niedrigsten Interferenzpegel zeigt, das Umschalten von einem verfügbaren Betriebskanal innerhalb des besagten ersten Bands auf einen verfügbaren Betriebskanal innerhalb des besagten zweiten Bands umfasst.

6. Verwaltungsverfahren nach einem beliebigen der vorstehenden Ansprüche, wobei das Schätzen (120), basierend auf den besagten Signalstärkeparametern, von Interferenzpegeln an dem besagten mehr als einem aus der besagten Vielzahl von verfügbaren Betriebskanälen des besagten Zugangspunkts das Kumulieren der besagten Signalstärkeparameter pro verfügbaren Betriebskanal umfasst.

7. Verwaltungssystem (300), das mindestens einen Zugangspunkt umfasst, wobei der Zugangspunkt auf mindestens einem aus einer Vielzahl von verfügbaren Betriebskanälen in Betrieb ist, wobei das System umfasst:

- eine Erhaltungseinheit (310), die konfiguriert ist zum Erhalten von Signalstärkeparametern, die bezeichnend sind für Signalstärken, die von dem besagten Zugangspunkt an mehr als einem aus der besagten Vielzahl von verfügbaren Betriebskanälen erkannt werden;
- eine Schätzungseinheit (320), die konfiguriert ist zum Schätzen, basierend auf den besagten Signalstärkeparametern, von Interferenzpegeln in Zusammenhang mit den besagten mehr als einem aus der besagten Vielzahl von verfügbaren Betriebskanälen; und
- eine Auswähleinheit (330), die konfiguriert ist zum Auswählen aus den besagten mehr als einem aus der besagten Vielzahl von verfügbaren Betriebskanälen, basierend auf den besagten Interferenzpegeln, eines Betriebskanals, der einen niedrigsten Interferenzpegel zeigt;

**dadurch gekennzeichnet, dass** die Erhaltungseinheit (310), die Schätzungseinheit (320) und die Auswähleinheit (330) konfiguriert sind zum Wiederholen ihrer jeweiligen Aufgaben getrennt für jede drahtlose Benutzervorrichtung, die mit dem besagten Zugangspunkt verbunden ist.

**8.** Verwaltungssystem nach Anspruch 7, wobei die Erhaltungseinheit (310) weiterhin konfiguriert ist zum Erkennen der besagten Signalstärken aus mindestens einer Quelle aus einer Gruppe, die mindestens einen benachbarten Zugangspunkt und mindestens eine drahtlose Benutzervorrichtung umfasst.

**9.** Verwaltungssystem nach Anspruch 7 oder 8, weiterhin umfassend ein Netzwerk von drahtlosen Zugangspunkten, das mindestens einen benachbarten Zugangspunkt umfasst; und eine Übertragungsleistung-Steuereinheit (340), die konfiguriert ist zum Senken von Interferenzpegeln für den besagten Zugangspunkt durch Senken einer Übertragungsleistung des besagten mindestens einen benachbarten Zugangspunkts.

**10.** Verwaltungssystem nach Anspruch 9, wobei die besagte Übertragungsleistung-Steuereinheit (340) weiterhin konfiguriert ist zum Senken der Übertragungsleitung des besagten mindestens einen benachbarten Zugangspunkts ohne Beeinträchtigung einer erforderlichen Dienstgüte des besagten mindestens einen benachbarten Zugangspunkts.

**11.** Verwaltungssystem nach Anspruch 9 oder 10, wobei die Übertragungsleistung-Steuereinheit (340) eine Fernkomponente ist, die von dem besagten Zugangspunkt und dem besagten mindestens einen benachbarten Zugangspunkt getrennt ist.

**12.** Verwaltungssystem nach einem beliebigen der Ansprüche 8 bis 12, wobei die besagte Vielzahl von verfügbaren Betriebskanälen auf mindestens ein erstes Band und ein zweites Band aufgeteilt ist, und wobei die Auswähleinheit weiterhin konfiguriert ist zum Umschalten von einem verfügbaren Betriebskanal innerhalb des besagten ersten Bands auf einen verfügbaren Betriebskanal innerhalb des besagten zweiten Bands.

**13.** Verwaltungssystem nach einem beliebigen der Ansprüche 8 bis 13, wobei die Schätzungseinheit (320) weiterhin konfiguriert ist zum Kumulieren der besagten Signalstärkeparameter pro verfügbaren Betriebskanal.

**14.** Computerprogrammprodukt, umfassend computerausführbare Anweisungen zum Durchführen des Verfahrens nach einem beliebigen der Ansprüche 1 bis 6, wenn das Programm auf einem Computer gestartet wird.

## Revendications

**1.** Procédé de gestion (100) de fonctionnement d'un point d'accès sans fil, le point d'accès fonctionnant sur au moins un canal parmi une pluralité de canaux opérationnels disponibles, le procédé comprenant les étapes suivantes :

- obtenir (110) des paramètres d'intensité de signal, qui sont représentatifs d'intensités de signal qui sont détectées par ledit point d'accès au niveau de plusieurs canaux parmi ladite pluralité de canaux opérationnels disponibles ;
- estimer (120), sur la base desdits paramètres d'intensité de signal, des niveaux d'interférence relatifs auxdits plusieurs canaux parmi ladite pluralité de canaux opérationnels disponibles ; et
- sélectionner (130) à partir desdits plusieurs canaux parmi ladite pluralité de canaux opérationnels disponibles, sur la base desdits niveaux d'interférence, un canal opérationnel présentant un niveau d'interférence le plus faible ; **caractérisé par** la répétition des étapes décrites (110, 120, 130) séparément pour chaque dispositif utilisateur sans fil qui est connecté audit point d'accès.

**2.** Procédé de gestion selon la revendication 1, dans lequel l'étape d'obtention (110) d'intensités de signal comprend la détection desdites intensités de signal provenant d'au moins une source à partir d'un groupe comprenant au moins un point d'accès voisin et au moins un dispositif utilisateur sans fil.

**3.** Procédé de gestion selon l'une quelconque des revendications précédentes, dans lequel ledit point d'accès fait partie d'un réseau de points d'accès sans fil qui comprend au moins un point d'accès voisin, le procédé comprenant une étape d'abaissement (140) de niveaux d'interférence pour ledit point d'accès en abaissant une puissance d'émission dudit au moins un point d'accès voisin.

**4.** Procédé de gestion selon la revendication 3 dans lequel l'abaissement (140) d'une puissance d'émission d'au moins un point d'accès voisin comprend l'abaissement de la puissance d'émission dudit au moins un point d'accès voisin sans compromettre une qualité de service requise dudit au moins un point d'accès voisin.

**5.** Procédé de gestion selon l'une quelconque des revendications précédentes, dans lequel ladite pluralité de canaux opérationnels disponibles sont divisés sur au moins une première bande et une seconde bande, et dans lequel la sélection à partir desdits plusieurs canaux parmi ladite pluralité de canaux opérationnels disponibles, sur la base desdits niveaux d'interférence, d'un canal opérationnel présentant un niveau d'interférence le plus bas comprend le passage d'un canal opérationnel disponible dans ladite première bande à un canal opérationnel disponible dans ladite seconde bande.

6. Procédé de gestion selon l'une quelconque des revendications précédentes, dans lequel l'estimation (120), sur la base desdits paramètres d'intensité de signal, de niveaux d'interférence au niveau desdits plusieurs canaux parmi ladite pluralité de canaux opérationnels disponibles dudit point d'accès comprend l'accumulation desdits paramètres d'intensité de signal par canal opérationnel disponible.

7. Système de gestion (300) comprenant au moins un point d'accès, dans lequel le point d'accès fonctionne sur au moins un canal parmi la pluralité de canaux opérationnels disponibles, le système comprenant :

   - une unité d'obtention (310) configurée pour obtenir des paramètres d'intensité de signal, qui sont représentatifs d'intensités de signal qui sont détectées par ledit point d'accès au niveau de plusieurs canaux parmi ladite pluralité de canaux opérationnels disponibles ;
   - une unité d'estimation (320) configurée pour estimer, sur la base desdits paramètres d'intensité de signal, des niveaux d'interférence relatifs auxdits plusieurs canaux parmi ladite pluralité de canaux opérationnels disponibles ; et
   - une unité de sélection (330) configurée pour sélectionner à partir desdits plusieurs canaux parmi ladite pluralité de canaux opérationnels disponibles, sur la base desdits niveaux d'interférence, un canal opérationnel présentant un niveau d'interférence le plus bas ;

   **caractérisé en ce que** l'unité d'obtention (310), l'unité d'estimation (320) et l'unité de sélection (330) sont configurées pour répéter leurs tâches respectives séparément pour chaque dispositif utilisateur sans fil qui est connecté audit point d'accès.

8. Système de gestion selon la revendication 7, dans lequel l'unité d'obtention (310) est en outre configurée pour détecter lesdites intensités de signal provenant d'au moins une source à partir d'un groupe comprenant au moins un point d'accès voisin et au moins un dispositif utilisateur sans fil.

9. Système de gestion selon la revendication 7 ou 8, comprenant en outre un réseau de points d'accès sans fil qui comprennent au moins un point d'accès voisin ; et une unité de commande de puissance d'émission (340) configurée pour abaisser des niveaux d'interférence pour ledit point d'accès en abaissant une puissance d'émission dudit au moins un point d'accès voisin.

10. Système de gestion selon la revendication 9 dans lequel ladite unité de commande de puissance d'émission (340) est en outre configurée pour abaisser la puissance d'émission dudit au moins un point d'accès voisin sans compromettre une qualité de service requise dudit au moins un point d'accès voisin.

11. Système de gestion selon la revendication 9 ou 10, dans lequel l'unité de commande de puissance d'émission (340) est un composant distant qui est séparé dudit point d'accès et dudit au moins un point d'accès voisin.

12. Système de gestion selon l'une quelconque des revendications 8 à 12, dans lequel ladite pluralité de canaux opérationnels disponibles sont divisés sur au moins une première bande et une seconde bande, et dans lequel l'unité de sélection est en outre configurée pour passer d'un canal opérationnel disponible dans ladite première bande à un canal opérationnel disponible dans ladite seconde bande.

13. Système de gestion selon l'une quelconque des revendications 8 à 13, dans lequel l'unité d'estimation (320) est en outre configurée pour accumuler lesdits paramètres d'intensité de signal par canal opérationnel disponible.

14. Produit de programme informatique comprenant des instructions exécutables par un ordinateur pour réaliser le procédé selon l'une quelconque des revendications 1 à 6, lorsque le programme est exécuté sur un ordinateur.

FIG. 1

200

**201** Collection of parameters

**202** Estimate two-dimensional interference level across all bands and channels

$$I_j^{(b,c)} = RSSI_j^{(b,c)}$$

**203** Joint Frequency re-use...

$$(b,c)_k = \arg\min I^{(b,c)} = \sum_{j(\neq k)}^{devices} I_j^{(b,c)}$$

**204** and coverage optimization

$$\min I_k^{(b,c)} = \sum_{j(\neq k)}^{devices} I_j^{(b,c)}(SSID_j)\ s.t.\ P_{j(\neq k)}^{(b,c)} \geq QoS(j)$$

**205** Network re-configuration

$$\left(b, c,\ P_{j(\neq k)}^{(b,c)}\right)_k$$

FIG. 2

FIG. 3

FIG. 4

**EP 3 048 846 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006292988 A1
- EP 1617600 A1
- WO 2013152305 A1